# EUROPÄISCHE PATENTANMELDUNG

(11) **EP 4 420 956 A1**
(43) Veröffentlichungstag der Anmeldung: **28.08.2024**
(21) Anmeldenummer: 24152533.6
(22) Anmeldetag: 18.01.2024
(51) Int. Cl.: B62D 5/093, B62D 5/06

(54) **HYDROSTATISCHE LENKEINRICHTUNG FÜR EIN NUTZFAHRZEUG**

(30) Priorität: 22.02.2023 DE 102023104288
(71) Anmelder: Deere & Company, Moline, IL 61265 (US)
(72) Erfinder: BROCKE, STEFAN, 68163 Mannheim (DE); FRITZ, NORBERT, 68163 Mannheim (DE); STARCK, RICHARD, 68163 Mannheim (DE); GASSMANN, JONAS, 68163 Mannheim (DE); HARTMANN, FABIAN, 68163 Mannheim (DE)
(74) Vertreter: Dehnhardt, Florian Christopher

(57) **Zusammenfassung**

Eine hydrostatische Lenkeinrichtung (10) für ein Nutzfahrzeug (12) umfasst ein mittels einer Lenkhandhabe (16) steuerbares Lenkorbitrol (18), mittels dessen sich ein doppeltwirkender Lenkzylinder (42) nach Maßgabe einer an der Lenkhandhabe (16) auftretenden Lenkbetätigung auslenken lässt, indem je nach Betätigungsrichtung der Lenkhandhabe (16) ein erster Orbitrolanschluss (26) einen aus einer hydraulischen Hochdruckquelle (28) gespeisten Zulauf (30) und ein zweiter Orbitrolanschluss (32) einen mit einem Hydraulikreservoir (34) kommunizierenden Rücklauf (36) zur Ansteuerung gegenüberliegender Arbeitskammern (38, 40) des Lenkzylinders (42) bildet. Hierbei ist ein innerhalb des Lenkorbitrols (18) zwischen erstem und zweitem Orbitrolanschluss (26, 32) auftretender hydraulischer Leckagestrom mittels einer mit der Hochdruckquelle (28) und/oder dem Hydraulikreservoir (34) kommunizierenden Ventilanordnung (54) hinsichtlich einer hydraulischen Betätigung des Lenkzylinders (42) kompensierbar.

## Beschreibung

Die Erfindung betrifft eine hydrostatische Lenkeinrichtung für ein Nutzfahrzeug, umfassend ein mittels einer Lenkhandhabe steuerbares Lenkorbitrol, mittels dessen sich ein doppeltwirkender Lenkzylinder nach Maßgabe einer an der Lenkhandhabe auftretenden Lenkbetätigung auslenken lässt, indem je nach Betätigungsrichtung der Lenkhandhabe ein erster Orbitrolanschluss einen aus einer hydraulischen Hochdruckquelle gespeisten Zulauf und ein zweiter Orbitrolanschluss einen mit einem Hydraulikreservoir kommunizierenden Rücklauf zur Ansteuerung gegenüberliegender Arbeitskammern des Lenkzylinders bildet.

Eine derartige Anordnung erlaubt eine komfortable Lenkung selbst schwerer Nutzfahrzeuge, wozu der Lenkzylinder beispielsweise mit einer Achsschenkellenkung zur Beeinflussung der Stellung lenkbarer Räder des Nutzfahrzeugs in Verbindung steht. Aufgrund von systembedingten Leckagen führt das zwischen erstem und zweitem Orbitrolanschluss anliegende Druckgefälle jedoch zum Auftreten von Hydraulikverlusten innerhalb des Lenkorbitrols, sodass der durch den Zulauf hindurchtretende Volumenstrom letztlich um einen über den Rücklauf in Richtung des Hydraulikreservoirs abfließenden Leckagestrom verringert ist. Gemessen an der Lenkbetätigung der Lenkhandhabe, bei der es sich meist um ein Lenkrad handelt, hat dies eine verminderte Auslenkung des Lenkzylinders und damit des an den lenkbaren Rädern des Nutzfahrzeugs eingestellten Radlenkwinkels zur Folge. Hinzu kommt, dass sich das Druckgefälle zwischen den beiden Orbitrolanschlüssen beim Auslenken in der Regel betraglich von demjenigen beim Einlenken unterscheidet, was dann ebenfalls für die Leckageströme zutrifft. Dies wiederum führt dazu, dass mit Beendigung des Lenkvorgangs, also beim Wiedergeradestellen der lenkbaren Räder, die Lenkhandhabe nicht wieder vollständig ihre gewohnte Mitten- bzw. Neutralstellung einnimmt. Über die Zeit gesehen ergibt sich daraus ein Driften der Lenkhandhabenstellung gegenüber dem Radlenkwinkel, was für den Bediener irritierend sein kann.

Es ist daher Aufgabe der vorliegenden Erfindung, eine hydrostatische Lenkeinrichtung der eingangs genannten Art dahingehend weiterzubilden, dass ein unerwünschtes Driften der Lenkhandhabenstellung gegenüber dem Radlenkwinkel unterbunden oder zumindest auf für den Bediener akzeptable Ausmaße verringert wird.

Diese Aufgabe wird durch eine hydrostatische Lenkeinrichtung mit den Merkmalen des Patentanspruchs 1 gelöst.

Die hydrostatische Lenkeinrichtung für ein Nutzfahrzeug umfasst ein mittels einer Lenkhandhabe steuerbares Lenkorbitrol, mittels dessen sich ein doppeltwirkender Lenkzylinder nach Maßgabe einer an der Lenkhandhabe auftretenden Lenkbetätigung auslenken lässt, indem je nach Betätigungsrichtung der Lenkhandhabe ein erster Orbitrolanschluss einen aus einer hydraulischen Hochdruckquelle gespeisten Zulauf und ein zweiter Orbitrolanschluss einen mit einem Hydraulikreservoir kommunizierenden Rücklauf zur Ansteuerung gegenüberliegender Arbeitskammern des Lenkzylinders bildet. Hierbei ist ein innerhalb des Lenkorbitrols zwischen erstem und zweitem Orbitrolanschluss auftretender hydraulischer Leckagestrom mittels einer mit der Hochdruckquelle und/oder dem Hydraulikreservoir kommunizierenden Ventilanordnung hinsichtlich einer hydraulischen Betätigung des Lenkzylinders kompensierbar.

Die erfindungsgemäße Lenkeinrichtung ermöglicht es durch entsprechende Ansteuerung der Ventilanordnung, ein Driften der Lenkhandhabenstellung gegenüber dem Radlenkwinkel durch gezielten Ausgleich eines hierfür ursächlichen leckagebedingten Hydraulikverlusts bzw. -überschusses beim Betätigen des Lenkzylinders zu korrigieren. Bei der Lenkhandhabe handelt es sich typischerweise um ein Lenkrad, das über eine Lenksäule mit einer Eingangswelle des Lenkorbitrols mechanisch verbunden ist. Der Lenkzylinder kann Bestandteil einer herkömmlichen Achsschenkellenkung, aber auch einer Knicklenkung des Nutzfahrzeugs sein. In letzterem Fall sind zwischen den zu lenkenden Fahrzeugteilen üblicherweise zwei symmetrisch angeordnete Lenkzylinder vorgesehen, die zur Durchführung des Lenkvorgangs gegensinnig angesteuert werden.

Das Nutzfahrzeug kann von beliebiger Bauart sein und beispielsweise aus dem land- oder forstwirtschaftlichen Bereich, aber auch aus dem Baumaschinenbereich stammen.

Vorteilhafte Weiterbildungen der erfindungsgemäßen hydrostatischen Lenkeinrichtung gehen aus den Unteransprüchen hervor.

Bezüglich der konkreten Ausbildung der Ventilanordnung gibt es nun verschiedene Möglichkeiten, die unterschiedlichen Vorgehensweisen hinsichtlich der Driftkorrektur Rechnung tragen.

So kann gemäß einer ersten Ausführungsform der hydrostatischen Lenkeinrichtung vorgesehen sein, dass die Ventilanordnung zum Ausgleich eines leckagebedingten Hydraulikverlusts in einer der Arbeitskammern des Lenkzylinders ein mit der Hochdruckquelle in Verbindung stehendes elektrisch betätigbares Proportionalventil umfasst, das auslassseitig über ein elektrisch betätigbares Wechselventil wahlweise mit einer der beiden Arbeitskammern des Lenkzylinders verbindbar ist.

Hierbei kann eine Kontrolleinheit das elektrisch betätigbare Proportionalventil und/oder das elektrisch betätigbare Wechselventil derart ansteuern, dass ein aufgrund eines Lenkvorgangs in einer der Arbeitskammern des Lenkzylinders auftretender leckagebedingter Hydraulikverlust durch gezielte Zufuhr von Hydraulikflüssigkeit seitens der Hochdruckquelle ausgeglichen wird. Hierbei ist es möglich, den Ausgleich kontinuierlichen während des gesamten Lenkvorgangs vorzunehmen. So ist zu jedem Zeitpunkt ein mit der aktuellen Lenkhandhabenstellung korrespondierender Radlenkwinkel gegeben. Abhängig von der Betätigungsrichtung der Lenkhandhabe wird das Wechselventil derart angesteuert, dass jeweils die mit dem Zulauf in Verbindung stehende, mithin die vom Hydraulikverlust betroffene Arbeitskammer des Lenkzylinders über das Proportionalventil gezielt mit Hydraulikflüssigkeit aus der Hochdruckquelle beaufschlagt werden kann.

Maßgeblichen Einfluss auf den innerhalb des Lenkorbitrols auftretenden leckagebedingten Hydraulikverlust haben der Umfang des Druckgefälles zwischen den Orbitrolanschlüssen sowie die über die Lenkhandhabe auf das Lenkorbitrol ausgeübte Betätigungscharakteristik bzw. die sich daraus ergebenden Lenkkräfte. So nimmt dieser erfahrungsgemäß mit Ausmaß und Geschwindigkeit einer bedienerseitigen Betätigung der Lenkhandhabe zu. Vorzugsweise schätzt die Kontrolleinheit daher den Umfang des leckagebedingten Hydraulikverlusts in Abhängigkeit einer ermittelten Druckdifferenz zwischen den beiden Orbitrolanschlüssen sowie in Abhängigkeit von Betrag und/oder zeitlicher Änderung einer eine Lenkbetätigung der Lenkhandhabe bzw. einer eine Auslenkung des Lenkzylinders repräsentierenden Lenkgröße ab. Die Ermittlung der Druckdifferenz erfolgt beispielsweise mittels eines ersten Drucksensors durch Erfassung eines Betriebsdrucks der Hochdruckquelle. Hierbei entspricht der erfasste Betriebsdruck in guter Näherung der Druckdifferenz zwischen Zu- und Rücklauf, denn der Hydraulikdruck im Hydraulikreservoir ist demgegenüber stets vernachlässigbar klein. Zusätzlich oder alternativ sind zweite und dritte Drucksensoren vorhanden, die dem Vergleich der zwischen den beiden Orbitrolanschlüssen und damit der zwischen Zu- und Rücklauf herrschenden Druckverhältnisse dienen. Zur Ermittlung der Lenkgröße kann ferner ein mit der Lenksäule bzw. dem Lenkzylinder zusammenwirkender Drehwinkelsensor bzw. Stellwegsensor vorgesehen sein. Die entsprechenden Sensorsignale werden der Kontrolleinheit über einen CAN-Datenbus des Nutzfahrzeugs zur Auswertung zugeführt. Die Abschätzung des Umfangs das leckagebedingten Hydraulikverlusts auf Grundlage der vorgenannten Größen kann hierbei ausgehend von einem in der Kontrolleinheit abgelegten empirisch ermittelten Zusammenhang erfolgen.

Gemäß einer zweiten Ausführungsform der hydrostatischen Lenkeinrichtung kann vorgesehen sein, dass die Ventilanordnung ein mit dem Hydraulikreservoir auslassseitig in Verbindung stehendes elektrisch betätigbares Proportionalventil umfasst, das über ein elektrisch betätigbares Wechselventil wahlweise mit einer der beiden Arbeitskammern des Lenkzylinders verbindbar ist.

In diesem Fall ist es möglich, dass eine Kontrolleinheit das elektrisch betätigbare Proportionalventil und/oder das elektrisch betätigbare Wechselventil derart ansteuert, dass ein aufgrund eines Lenkvorgangs in einer der Arbeitskammern des Lenkzylinders auftretender leckagebedingter Hydrauliküberschuss in das Hydraulikreservoir abgeleitet wird. Ein leckagebedingter Hydrauliküberschuss ergibt sich in der Regel daraus, dass bei Durchführung eines Lenkvorgangs das Druckgefälle und damit der Leckagestrom zwischen den beiden Orbitrolanschlüssen beim Auslenken betraglich größer ist als beim Einlenken, sodass beim Wiedergeradestellen der lenkbaren Räder insofern ein Ungleichgewicht entsteht. Durch entsprechende Ansteuerung der Ventilanordnung lässt sich der Hydrauliküberschuss mit Beendigung des Lenkvorgangs gezielt in Richtung des Hydraulikreservoirs abführen. Dies ersetzt die im Falle der ersten Ausführungsform vorgesehene kontinuierliche Kompensation des Leckagestroms und führt zu einem dementsprechend verringerten Steueraufwand seitens der Kontrolleinheit.

Auch hier kann die Kontrolleinheit den Umfang des leckagebedingten Hydrauliküberschusses in Abhängigkeit einer ermittelten Druckdifferenz zwischen Zu- und Rücklauf (und damit den beiden Orbitrolanschlüssen) sowie in Abhängigkeit von Betrag und/oder zeitlicher Änderung einer eine Auslenkung des Lenkzylinders repräsentierenden Lenkgröße abschätzen. Bezüglich der sensorischen Ermittlung dieser Größen sei auf die Erläuterungen im Zusammenhang mit der ersten Ausführungsform der hydraulischen Lenkeinrichtung hingewiesen. Hierbei schätzt die Kontrolleinheit den Umfang des leckagebedingten Hydrauliküberschusses durch zeitliche Integration der betraglichen Differenz der während des Lenkvorgangs beobachteten Leckageströme ab.

Die erfindungsgemäße hydrostatische Lenkeinrichtung für ein Nutzfahrzeug wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes erstes Ausführungsbeispiel der erfindungsgemäßen hydrostatischen Lenkeinrichtung,
- Fig. 2: der Verlauf der hydraulischen Volumenströme innerhalb der Lenkeinrichtung gemäß Fig. 1 während einer Auslenkphase,
- Fig. 3: der Verlauf der hydraulischen Volumenströme innerhalb der Lenkeinrichtung gemäß Fig. 1 während einer Einlenkphase,
- Fig. 4: ein schematisch dargestelltes zweites Ausführungsbeispiel der erfindungsgemäßen hydrostatischen Lenkeinrichtung,
- Fig. 5: der Verlauf der hydraulischen Volumenströme innerhalb der Lenkeinrichtung gemäß Fig. 3 während einer Auslenkphase, und
- Fig. 6: der Verlauf der hydraulischen Volumenströme innerhalb der Lenkeinrichtung gemäß Fig. 3 während einer Einlenkphase.

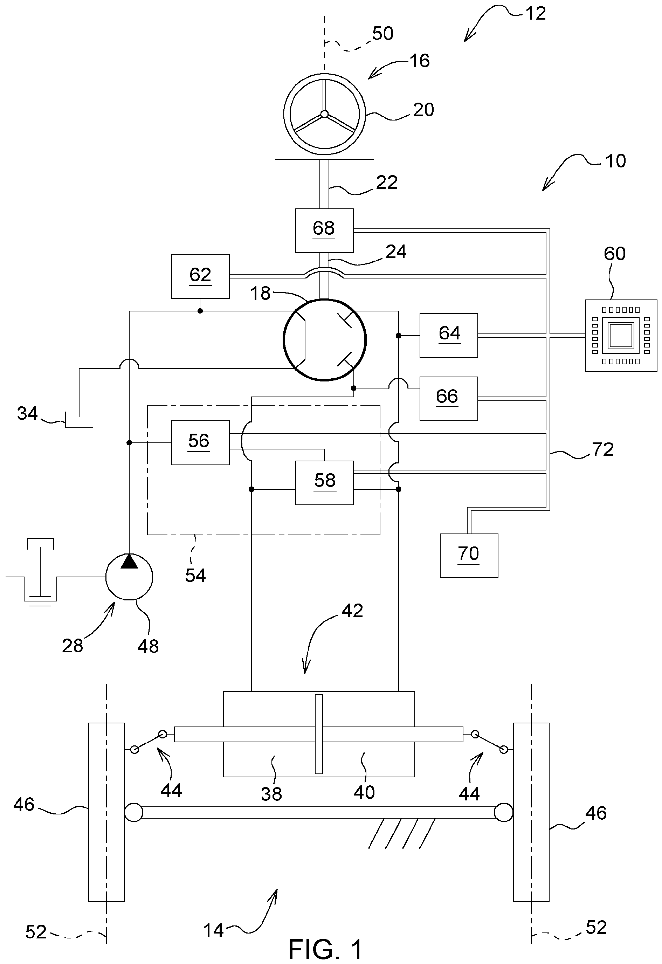

Fig. 1 zeigt ein schematisch dargestelltes erstes Ausführungsbeispiel der erfindungsgemäßen hydrostatischen Lenkeinrichtung 10 für ein Nutzfahrzeug 12. Bei dem nicht näher wiedergegebenen Nutzfahrzeug 12 handelt es sich beispielhaft um einen landwirtschaftlichen Traktor 14. Alternativ kann das Nutzfahrzeug 12 jedoch auch von beliebiger anderer Bauart aus dem land- oder forstwirtschaftlichen Bereich, wie auch aus dem Baumaschinenbereich sein.

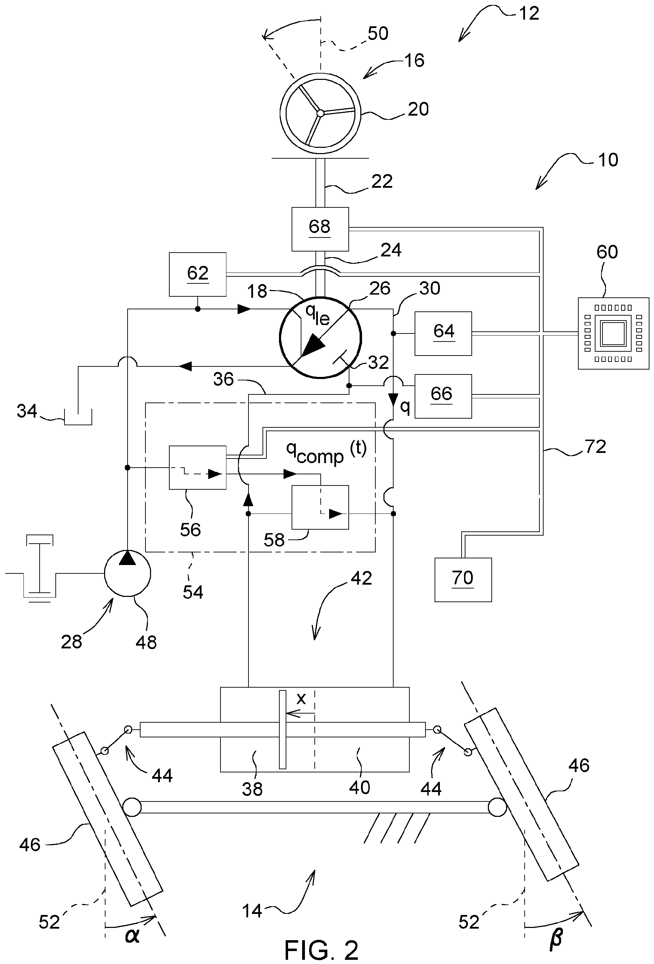

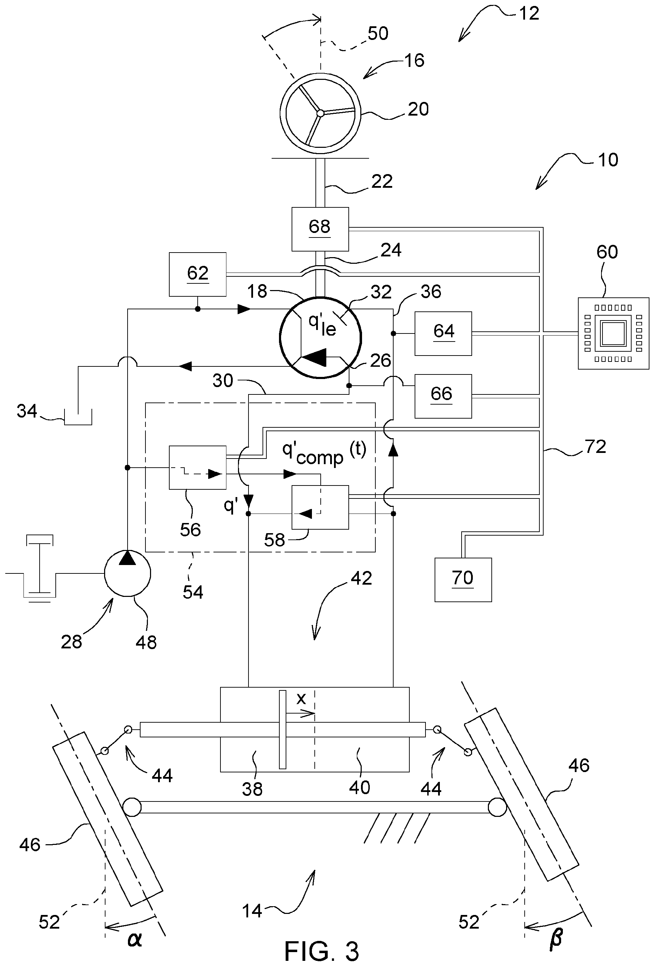

Die hydrostatische Lenkeinrichtung 10 umfasst ein mittels einer Lenkhandhabe 16 steuerbares Lenkorbitrol 18. Genauer gesagt handelt es sich bei der Lenkhandhabe 16 um ein Lenkrad 20, das über eine Lenksäule 22 mit einer Eingangswelle 24 des Lenkorbitrols 18 mechanisch verbunden ist. Wie in Fig. 2 bzw. 3 zu erkennen ist, bildet abhängig von der jeweiligen Betätigungsrichtung der Lenkhandhabe 16 und damit der Eingangswelle 24 des Lenkorbitrols 18 ein erster Orbitrolanschluss 26 einen aus einer hydraulischen Hochdruckquelle 28 gespeisten Zulauf 30 und ein zweiter Orbitrolanschluss 32 einen mit einem Hydraulikreservoir 34 kommunizierenden Rücklauf 36 zur Ansteuerung gegenüberliegender linker und rechter Arbeitskammern 38, 40 eines an dem Lenkorbitrol 18 angeschlossenen doppeltwirkenden Lenkzylinders 42. Der Lenkzylinder 42 ist hierbei Bestandteil einer herkömmlichen Achsschenkellenkung 44 zur Beeinflussung der Stellung lenkbarer Vorderräder 46 des landwirtschaftlichen Traktors 14.

Beim Wechsel der Betätigungsrichtung der Lenkhandhabe 16 kehrt sich die Funktion der beiden Orbitrolanschlüsse 26, 32 als Zu- bzw. Rücklauf 30, 36 um, wobei der Umfang der Lenkbetätigung bestimmend ist für den Betrag der durch das Lenkorbitrol 18 geförderten Volumenströme. Auf diese Weise lässt sich der Lenkzylinder 42 entsprechend den beiden möglichen Fahrtrichtungen des Nutzfahrzeugs 12 zur Einstellung eines gewünschten Radlenkwinkels α, β auslenken. Hierbei bezeichnet α den Radlenkwinkel am linken bzw. β den Radlenkwinkel am rechten der beiden lenkbaren Vorderräder 46, wobei vorliegend α = β gilt.

Bei der hydraulischen Hochdruckquelle 28 handelt es sich um eine motorisch angetriebene Hydraulikpumpe 48, die mit Hydraulikflüssigkeit aus dem Hydraulikreservoir 34 gespeist wird.

In Fig. 2 und 3 ist der Verlauf der hydraulischen Volumenströme innerhalb der Lenkeinrichtung 10 bei Durchführung eines aus einer Auslenkphase (siehe Fig. 2) und einer Einlenkphase (siehe Fig. 3) bestehenden Lenkvorgangs veranschaulicht. Beispielhaft erfolgt zunächst eine Lenkbetätigung der Lenkhandhabe 16 aus ihrer zentrierten Mitten- bzw. Neutralstellung 50 heraus nach links, gefolgt durch ein Zurücklenken nach rechts. Der zentrierten Mitten- bzw. Neutralstellung 50 entspricht hierbei eine Geradeausstellung 52 der lenkbaren Vorderräder 46 des landwirtschaftlichen Traktors 14.

Aufgrund von systembedingten Leckagen führt das zwischen erstem und zweitem Orbitrolanschluss 26, 32 anliegende Druckgefälle zum Auftreten von Hydraulikverlusten innerhalb des Lenkorbitrols 18. Der durch den Zulauf 30 hindurchtretende Volumenstrom q bzw. q' ist daher um einen über den Rücklauf 36 in Richtung des Hydraulikreservoirs 34 abfließenden Leckagestrom qₗₑ bzw. q'ₗₑ verringert. Gemessen an der Lenkbetätigung der Lenkhandhabe 16 hat dies eine verminderte Auslenkung x des Lenkzylinders 42 und damit des an den lenkbaren Vorderrädern 46 eingestellten Radlenkwinkels α, β zur Folge. Hinzu kommt, dass sich das Druckgefälle zwischen den beiden Orbitrolanschlüssen 26, 32 beim Auslenken in der Regel betraglich von demjenigen beim Einlenken unterscheidet, was dann ebenfalls für die Leckageströme qₗₑ und q'ₗₑ zutrifft. Dies wiederum führt dazu, dass mit Beendigung des Lenkvorgangs, also beim Wiedergeradestellen der lenkbaren Vorderräder 46, die Lenkhandhabe 16 nicht wieder vollständig ihre Mitten- bzw. Neutralstellung 50 einnimmt. Über die Zeit gesehen ergibt sich daraus ein Driften der Lenkhandhabenstellung gegenüber dem Radlenkwinkel α, β.

Um den hierfür ursächlichen leckagebedingten Hydraulikverlust in den Arbeitskammern 38, 40 des Lenkzylinders 42 ausgleichen zu können, umfasst die Lenkeinrichtung 10 eine Ventilanordnung 54 mit einem mit der Hochdruckquelle 28 in Verbindung stehenden elektrisch betätigbaren Proportionalventil 56, das sich auslassseitig über ein elektrisch betätigbares Wechselventil 58 wahlweise mit einer der beiden Arbeitskammern 38, 40 des Lenkzylinders 42 verbinden lässt. Eine Kontrolleinheit 60 steuert das elektrisch betätigbare Proportionalventil 56 und/oder das elektrisch betätigbare Wechselventil 58 derart an, dass ein aufgrund eines Lenkvorgangs in einer der Arbeitskammern 38, 40 des Lenkzylinders 42 auftretender leckagebedingter Hydraulikverlust durch gezielte Zufuhr von Hydraulikflüssigkeit seitens der Hochdruckquelle 28 ausgeglichen wird. Hierbei wird der Ausgleich kontinuierlich während des gesamten Lenkvorgangs vorgenommen, indem über die Ventilanordnung 54 zeitlich korrespondierende Kompensationsströme q_{comp}(t) = - qₗₑ(t) bzw. q'_{comp}(t) = - q'ₗₑ(t) eingesteuert werden. So ist zu jedem Zeitpunkt ein mit der aktuellen Lenkhandhabenstellung korrespondierender Radlenkwinkel α, β gegeben. Wie in Fig. 2 bzw. 3 ersichtlich ist, wird das Wechselventil 58 abhängig von der Betätigungsrichtung der Lenkhandhabe 16 derart angesteuert, dass jeweils die mit dem Zulauf 30 in Verbindung stehende, mithin die vom Hydraulikverlust betroffene Arbeitskammer 38, 40 des Lenkzylinders 42 über das Proportionalventil 56 gezielt mit Hydraulikflüssigkeit aus der Hochdruckquelle 28 beaufschlagt wird. Somit wird durch entsprechende Ansteuerung der Ventilanordnung 54 ein Driften der Lenkhandhabenstellung gegenüber dem Radlenkwinkel α, β durch gezielten Ausgleich eines hierfür ursächlichen leckagebedingten Hydraulikverlusts beim Betätigen des Lenkzylinders 42 korrigiert.

Maßgeblichen Einfluss auf den innerhalb des Lenkorbitrols 18 auftretenden leckagebedingten Hydraulikverlust und damit den Betrag der Leckageströme qₗₑ bzw. q'ₗₑ haben der Umfang des Druckgefälles zwischen den Orbitrolanschlüssen 26, 32 sowie die über die Lenkhandhabe 16 auf das Lenkorbitrol 18 ausgeübte Betätigungscharakteristik bzw. die sich daraus ergebenden Lenkkräfte. Die Kontrolleinheit 60 schätzt daher den Umfang des leckagebedingten Hydraulikverlusts in Abhängigkeit einer ermittelten Druckdifferenz zwischen den beiden Orbitrolanschlüssen 26, 32 sowie in Abhängigkeit von Betrag und/oder zeitlicher Änderung einer eine Lenkbetätigung der Lenkhandhabe 16 bzw. einer eine Auslenkung x des Lenkzylinders 42 repräsentierenden Lenkgröße ab.

Die Ermittlung der Druckdifferenz erfolgt mittels eines ersten Drucksensors 62 durch Erfassung eines Betriebsdrucks der Hochdruckquelle 28. Hierbei entspricht der erfasste Betriebsdruck in guter Näherung der Druckdifferenz zwischen Zu- und Rücklauf 30, 36, denn der Hydraulikdruck im Hydraulikreservoir 34 ist demgegenüber stets vernachlässigbar klein. Optional können auch zweite und dritte Drucksensoren 64, 66 vorhanden sein, die dem unmittelbaren Vergleich der zwischen den beiden Orbitrolanschlüssen 26, 32 und damit der zwischen Zu- und Rücklauf 30, 36 herrschenden Druckverhältnisse dienen.

Zur Ermittlung der Lenkgröße ist ferner ein mit der Lenksäule 22 bzw. dem Lenkzylinder 42 zusammenwirkender Drehwinkelsensor 68 bzw. Stellwegsensor 70 vorgesehen.

Die entsprechenden Sensorsignale werden der Kontrolleinheit 60 über einen CAN-Datenbus 72 des landwirtschaftlichen Traktors 14 zur Auswertung zugeführt. Die Abschätzung des Umfangs das leckagebedingten Hydraulikverlusts bzw. der zugehörigen Leckageströme qₗₑ bzw. q'ₗₑ auf Grundlage der vorgenannten Größen erfolgt dann ausgehend von einem in der Kontrolleinheit 60 abgelegten empirisch ermittelten Zusammenhang.

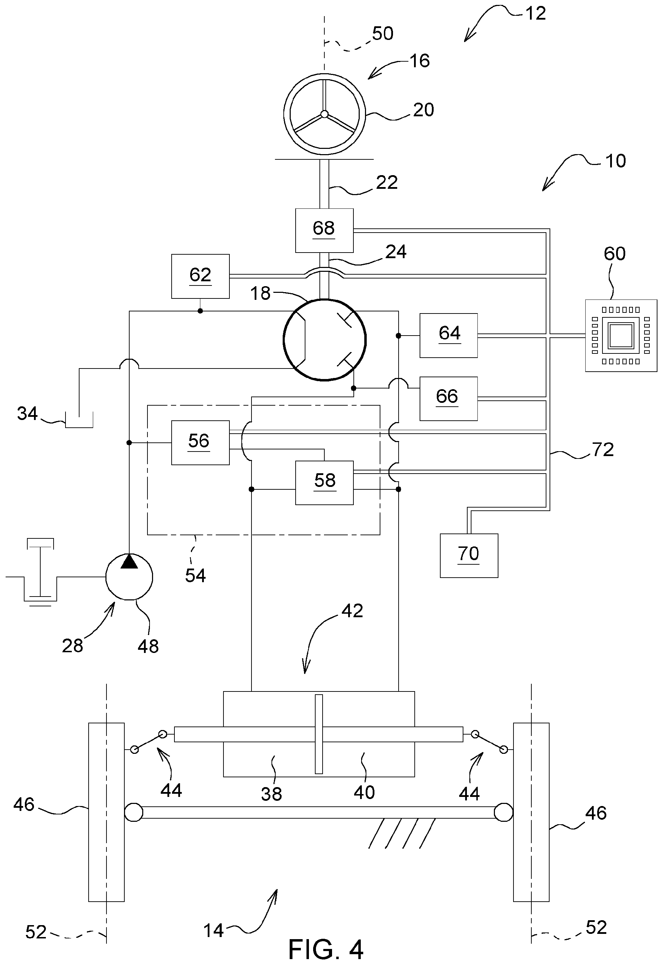

Fig. 4 zeigt ein schematisch dargestelltes zweites Ausführungsbeispiel der erfindungsgemäßen hydraulischen Lenkeinrichtung 10 für ein Nutzfahrzeug 12. Dieses unterscheidet sich von dem ersten Ausführungsbeispiel dahingehend, dass das von der Ventilanordnung 54 umfasste elektrisch betätigbare Proportionalventil 56 nicht mit der Hochdruckquelle 28, sondern mit dem Hydraulikreservoir 34 in Verbindung steht. Auch hier lässt sich das Proportionalventil 56 auslassseitig über das elektrisch betätigbare Wechselventil 58 wahlweise mit einer der beiden Arbeitskammern 38, 40 des Lenkzylinders 42 verbinden. Dies macht es möglich, zum Zwecke der Driftkorrektur anstelle eines unmittelbaren Ausgleichs des leckagebedingten Hydraulikverlusts einen im Zuge des Lenkvorgangs anfallenden Hydrauliküberschuss Δqₗₑ zu beseitigen.

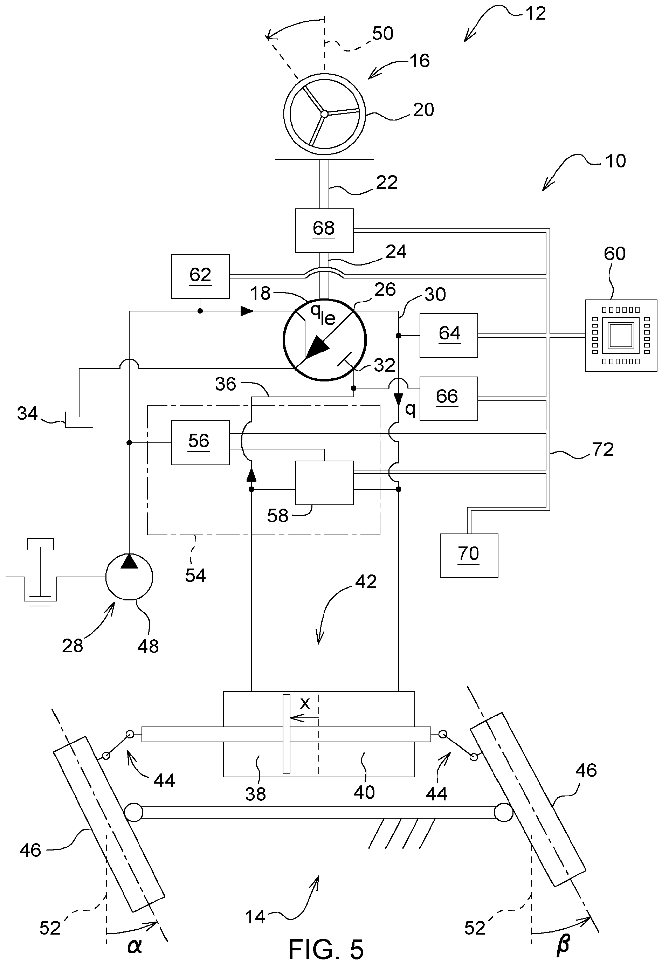

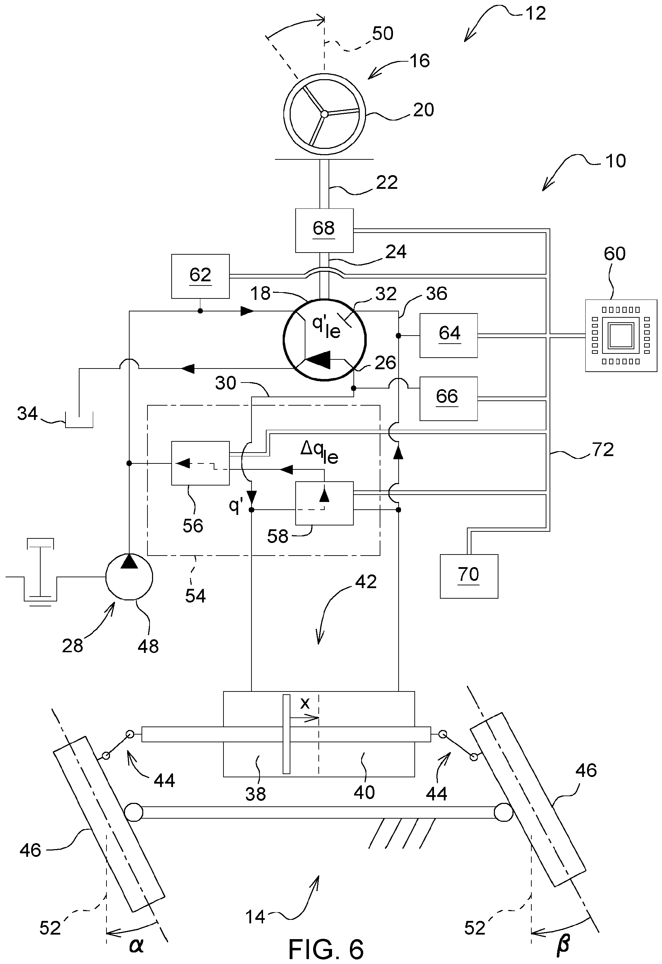

Ein solcher leckagebedingter Hydrauliküberschuss Δqₗₑ ergibt sich in der Regel daraus, dass bei Durchführung eines Lenkvorgangs das Druckgefälle und damit der Leckagestrom zwischen den beiden Orbitrolanschlüssen 26, 32 beim Auslenken betraglich größer ist als beim Einlenken, qₗₑ > q'ₗₑ. Insoweit ist in Fig. 5 und 6 der Verlauf der hydraulischen Volumenströme innerhalb der Lenkeinrichtung 10 bei Durchführung eines aus einer Auslenkphase (siehe Fig. 5) und einer Einlenkphase (siehe Fig. 6) bestehenden Lenkvorgangs veranschaulicht.

Wie in Fig. 6 zu sehen ist, steuert die Kontrolleinheit 60 das elektrisch betätigbare Proportionalventil 56 und/oder das elektrisch betätigbare Wechselventil 58 derart an, dass der beim Aus- und Einlenken (vorliegend) in der linken Arbeitskammer 38 auftretende leckagebedingte Hydrauliküberschuss Δqₗₑ mit Beendigung des Lenkvorgangs gezielt in das Hydraulikreservoir 34 abgeleitet wird. Dies ersetzt die im Falle des ersten Ausführungsbeispiels vorgesehene kontinuierliche Kompensation der Leckageströme qₗₑ bzw. q'ₗₑ und führt zu einem dementsprechend geringeren Steueraufwand seitens der Kontrolleinheit 60.

Die Kontrolleinheit 60 schätzt den Umfang des leckagebedingten Hydrauliküberschusses Δqₗₑ durch zeitliche Integration der betraglichen Differenz der während des Lenkvorgangs beobachteten Leckageströme qₗₑ bzw. q'ₗₑ ab. Bezüglich deren Ermittlung sei auf die betreffenden Ausführungen im Zusammenhang mit dem ersten Ausführungsbeispiel hingewiesen.

Die erfindungsgemäße Lenkeinrichtung 10 beruht somit auf dem Ansatz, durch entsprechende Ansteuerung der Ventilanordnung 54, ein Driften der Lenkhandhabenstellung gegenüber dem Radlenkwinkel α, β durch gezielten Ausgleich eines hierfür ursächlichen leckagebedingten Hydraulikverlusts bzw. -überschusses beim Betätigen des Lenkzylinders 42 zu korrigieren.

Allgemein gesprochen erlauben es die beiden vorstehend beschriebenen Ausführungsformen der hydrostatischen Lenkeinrichtung 10, auf jeweils unterschiedlichem Wege auf Veranlassung der Kontrolleinheit 60 einen innerhalb des Lenkorbitrols 18 zwischen erstem und zweitem Orbitrolanschluss 26, 32 auftretenden hydraulischen Leckagestrom q_{le,} q'ₗₑ bzw. Δqₗₑ mittels der mit der Hochdruckquelle 28 (Fig. 2 und 3) und/oder dem Hydraulikreservoir 34 (Fig. 5 und 6) kommunizierenden Ventilanordnung 54 hinsichtlich einer hydraulischen Betätigung des Lenkzylinders 42 zu kompensieren.

Die Ventilanordnung 54 ist ferner konstruktiv derart ausgelegt, dass der maximale Durchfluss selbst im Falle einer Fehlfunktion soweit begrenzt ist, dass die Lenkbarkeit des landwirtschaftlichen Traktors 14 nicht maßgeblich beeinträchtigt wird. Damit behält der Bediener stets die Kontrolle über den landwirtschaftlichen Traktor 14.

Auch sei angemerkt, dass die im Zusammenhang mit den beiden Ausführungsbeispielen beschriebene Vorgehensweise zur Driftkorrektur analog für den Fall einer Lenkbetätigung der Lenkhandhabe 16 in entgegengesetzter Richtung zutrifft. Insoweit soll zur Vermeidung von Wiederholungen auf weitergehende Ausführungen verzichtet werden.

## Patentansprüche

1. Hydrostatische Lenkeinrichtung für ein landwirtschaftliches Nutzfahrzeug, umfassend ein mittels einer Lenkhandhabe (16) steuerbares Lenkorbitrol (18), mittels dessen sich ein doppeltwirkender Lenkzylinder (42) nach Maßgabe einer an der Lenkhandhabe (16) auftretenden Lenkbetätigung auslenken lässt, indem je nach Betätigungsrichtung der Lenkhandhabe (16) ein erster Orbitrolanschluss (26) einen aus einer hydraulischen Hochdruckquelle (28) gespeisten Zulauf (30) und ein zweiter Orbitrolanschluss (32) einen mit einem Hydraulikreservoir (34) kommunizierenden Rücklauf (36) zur Ansteuerung gegenüberliegender Arbeitskammern (38, 40) des Lenkzylinders (42) bildet, **dadurch gekennzeichnet, dass** ein zwischen erstem und zweitem Orbitrolanschluss (26, 32) auftretender hydraulischer Leckagestrom mittels einer mit der Hochdruckquelle (28) und/oder dem Hydraulikreservoir (34) kommunizierenden Ventilanordnung (54) hinsichtlich einer hydraulischen Betätigung des Lenkzylinders (42) kompensierbar ist.

2. Hydrostatische Lenkeinrichtung nach Anspruch 1, **dadurch gekennzeichnet, dass** die Ventilanordnung (54) zum Ausgleich eines leckagebedingten Hydraulikverlusts in einer der Arbeitskammern (38, 40) des Lenkzylinders (42) ein mit der Hochdruckquelle (28) in Verbindung stehendes elektrisch betätigbares Proportionalventil (56) umfasst, das auslassseitig über ein elektrisch betätigbares Wechselventil (58) wahlweise mit einer der beiden Arbeitskammern (38, 40) verbindbar ist.

3. Hydrostatische Lenkeinrichtung nach Anspruch 2, **dadurch gekennzeichnet, dass** eine Kontrolleinheit (60) das elektrisch betätigbare Proportionalventil (56) und/oder das elektrisch betätigbare Wechselventil (58) derart ansteuert, dass ein aufgrund eines Lenkvorgangs in einer der Arbeitskammern (38, 40) des Lenkzylinders (42) auftretender leckagebedingter Hydraulikverlust durch gezielte Zufuhr von Hydraulikflüssigkeit seitens der Hochdruckquelle (28) ausgeglichen wird.

4. Hydrostatische Lenkeinrichtung nach Anspruch 3, **dadurch gekennzeichnet, dass** die Kontrolleinheit (60) daher den Umfang des leckagebedingten Hydraulikverlusts in Abhängigkeit einer ermittelten Druckdifferenz zwischen den beiden Orbitrolanschlüssen (26, 32) sowie in Abhängigkeit von Betrag und/oder zeitlicher Änderung einer eine Lenkbetätigung der Lenkhandhabe (16) bzw. einer eine Auslenkung des Lenkzylinders (42) repräsentierenden Lenkgröße abschätzt.

5. Hydrostatische Lenkeinrichtung nach Anspruch 1, **dadurch gekennzeichnet, dass** die Ventilanordnung (54) ein mit dem Hydraulikreservoir (34) auslassseitig in Verbindung stehendes elektrisch betätigbares Proportionalventil (56) umfasst, das über ein elektrisch betätigbares Wechselventil (58) wahlweise mit einer der beiden Arbeitskammern (38, 40) des Lenkzylinders (42) verbindbar ist.

6. Hydrostatische Lenkeinrichtung nach Anspruch 5, **dadurch gekennzeichnet, dass** eine Kontrolleinheit (60) den Umfang des leckagebedingten Hydrauliküberschusses in Abhängigkeit einer ermittelten Druckdifferenz zwischen den beiden Orbitrolanschlüssen (26, 32) sowie in Abhängigkeit von Betrag und/oder zeitlicher Änderung einer eine Auslenkung des Lenkzylinders (42) repräsentierenden Lenkgröße abschätzt.

7. Hydrostatische Lenkeinrichtung nach Anspruch 6, **dadurch gekennzeichnet, dass** die Kontrolleinheit (60) den leckagestrombedingten Hydrauliküberschuss in Abhängigkeit einer ermittelten Druckdifferenz zwischen Zu- und Rücklauf (30, 36) sowie in Abhängigkeit von Betrag und/oder zeitlicher Änderung einer eine Auslenkung des Lenkzylinders (42) repräsentierenden Lenkgröße abschätzt.
